# DEMANDE DE BREVET EUROPEEN

(11) **EP 2 330 541 A1**
(43) Date de publication de la demande: **08.06.2011**
(21) Numéro de dépôt: 09306156.2
(22) Date de dépôt: 30.11.2009
(51) Int. Cl.: G06K 19/077

(54) **Carte à puce incluant une carte à mémoire**

(71) Demandeur: Gemalto SA, 92190 Meudon (FR)
(72) Inventeur: Courtiade, Fabien, 92197, Meudon (FR)
(74) Mandataire: Cour, Pierre

(57) **Abrégé**

L'invention est une carte à puce comportant un corps de carte 1, ayant une cavité non-débouchante 2 ouverte sur une première face et une cavité débouchante 4 ouverte sur ses deux faces. Un module de carte à puce 3 est placé dans la cavité non-débouchante 2 de sorte que ses plages de contact soientt affleurantes à la première face du corps de carte 1. Une carte à mémoire 6 est placée dans la cavité débouchante 4. La carte à mémoire 6 comporte des zones de contacts 7 affleurantes à la première face du corps de carte 1. La carte à mémoire 6 est maintenue dans la cavité par un moyen de maintien amovible 8 permettant une personnalisation de la carte mémoire 6 appairée avec le module de carte à puce 3.

## Description

L'invention se rapporte à une carte à puce incluant une carte à mémoire.

Dans le domaine des télécommunications, il est connu d'utiliser une carte à puce, désignée sous les acronymes SIM (pour Subscriber Identity Module), USIM (Universal Subscriber Identity Module) ou UICC (pour Universal Integrated Circuit Card). Le rôle principal de cette carte SIM est de permettre une connexion à un réseau appartenant à un opérateur ainsi que d'identifier un utilisateur dans le réseau. Cette carte SIM est un élément sécurisé qui permet de garantir l'opérateur contre un éventuel détournement de son réseau et de garantir à l'utilisateur que quelqu'un d'autre ne se fait pas passer pour lui. En outre, il est connu d'utiliser cette carte SIM pour assurer la sécurisation de service en ligne utilisant le réseau téléphonique tel que par exemple une connexion à internet ou encore un service de paiement en ligne.

La téléphonie mobile a beaucoup évoluée et de nos jours. Ainsi un combiné de téléphonie mobile est désormais très proche d'un petit ordinateur portable assurant des communications téléphoniques et aussi des communications de données de type audio, texte, photo, vidéo, programme de jeu ou autres. De manière courante, un combiné de téléphonie mobile peut être muni d'une carte à mémoire amovible servant de mémoire de masse pour stocker différents types de fichiers correspondant aux différentes fonctions mises en oeuvre par le téléphone. C'est également le cas pour des modems utilisant les même réseaux de téléphonie mobile, par exemple de type clef USB qui peuvent comporter une carte mémoire comme mémoire de masse supportant différents programmes.

Les cartes à mémoires permettent de stocker de grande quantité de données mais ne sont pas aussi sécurisées qu'une carte SIM. Ainsi, il est tout à fait envisageable de stocker sur une carte à mémoire un programme en langage JAVA qui peut utiliser beaucoup de mémoire mais il n'est pas possible de stocker de manière suffisamment sure des informations très confidentielles permettant, par exemple, d'accéder au réseau ou à un compte bancaire. D'autre côté, une carte SIM ne dispose pas d'une capacité mémoire suffisante pour stocker des informations en grande quantité.

Il est connu de placer les informations dans la carte SIM ou dans la carte à mémoire en fonction de la sécurisation désirée ou de la taille mémoire. Cependant, il est possible d'avoir des programmes occupant une grande capacité mémoire qui sont utilisable en combinaison avec des données confidentielles. Actuellement, les données confidentielles sont stockées sur la carte SIM et le programme est téléchargé par le réseau dans la carte à mémoire. Le couplage entre la carte SIM et la carte à mémoire se fait lors du téléchargement du programme et des liens entre la carte à mémoire et la carte SIM sont établie au moment du téléchargement. Cependant lorsqu'un opérateur veut déployer de manière générique une application sur tous ses utilisateurs, cela nécessite de manière obligatoire un grand nombre de téléchargement et donc une surcharge du réseau.

Afin d'éviter une surcharge du réseau, il est possible qu'un opérateur fournisse à ses clients une carte mémoire préprogrammée et déjà couplée à une carte SIM. Un inconvénient réside dans la gestion de la personnalisation de la carte SIM et de la carte à mémoire. Les opérations étant faites séparément, il y a, d'une part, un risque de confusion lors de l'appairage des cartes et, d'autre part, il peut y avoir une addition de temps lors de la personnalisation si l'on doit attendre qu'une carte soit personnalisée avant de personnaliser l'autre.

L'invention remédie aux problèmes de personnalisation précités en réalisant un corps de carte à puce supportant à la fois la carte SIM et la carte à mémoire d'une manière permettant une personnalisation simultanée des deux cartes.

L'invention est une carte à puce comportant un corps de carte, un module de carte à puce, et une carte à mémoire. Le corps de carte a une première et une deuxième faces, opposées l'une à l'autre, une cavité non-débouchante ouverte sur la première face et une cavité débouchante sur les première et deuxième faces. Le module de carte à puce comporte au moins une puce et des plages de contact, ledit module étant placé dans la cavité non-débouchante de sorte que les plages de contact soient affleurantes à la première face du corps de carte. La carte à mémoire est placée dans la cavité débouchante, ladite carte à mémoire comportant des zones de contacts affleurantes sur une face et étant placée dans la cavité de sorte les zones contacts affleurantes sont affleurantes à la première face du corps de carte, ladite carte étant maintenue dans la cavité par un moyen de maintien amovible permettant une personnalisation de la carte mémoire appairée avec le module de carte à puce.

Préférentiellement, le moyen de maintien amovible peut être une couche adhésive placée sur la deuxième face et recouvrant au moins une partie de la cavité débouchante sur cette deuxième face, ladite couche adhésive permettant un collage-décollage de ladite couche, et le maintien dans la cavité de la carte à mémoire peut être assuré par le contact adhésif avec la couche adhésive. L'appairage entre la carte à mémoire et le module de carte à puce se fait par une personnalisation électrique dans laquelle au moins une donnée de la carte à mémoire fait référence à au moins une donnée du module de carte à puce. L'appairage se fait par l'inscription d'une information commune de référence sur le corps de carte et sur la carte à mémoire.

Selon un mode particulier de réalisation, la carte à mémoire peut être de type carte microSD et le corps de carte peut comporter un zone prédécoupée autour du module de carte à puce, ladite zone prédécoupée définissant un carte SIM au format plug SIM. La carte SIM et la carte microSD peuvent être toutes les deux personnalisées avec des données différentes correspondant à un même opérateur. La carte SIM et la carte microSD peuvent être toutes les deux personnalisées avec des données différentes correspondant à un même utilisateur.

Selon un autre aspect, l'invention est un procédé de personnalisation d'une carte à puce telle que précédemment décrit, dans lequel une première tête de contacts est mise en contact avec les plages de contact et une deuxième tête de contact est mise en contact avec les zones de contact de la carte à mémoire de manière simultanée de sorte que des données sont transmises au module et à la carte à mémoire de manière simultanée.

Selon un autre point de vu, l'invention est un dispositif de personnalisation de carte **caractérisé en ce qu**'il comporte au moins une zone de réception de carte destinée à recevoir une carte à puce, une première tête de contact destinée à communiquer à un module de carte à puce, une deuxième tête de contact différente de la première tête de contact et destinée à communiquer avec une carte à mémoire, et un moyen de synchronisation apte à mettre en contact simultanément la première et la deuxième têtes avec la carte à puce de sorte qu'un module de carte à puce et une carte à mémoire solidaire de la carte à puce puisse recevoir des données sur une même période de temps.

L'invention sera mieux comprise à la lecture de la description qui va suivre en se référant aux dessins annexes, parmi lesquels:
- la figure 1 montre une carte à puce selon l'invention, et
- la figure 2 montre une carte à puce en coupe lors d'une étape de personnalisation.

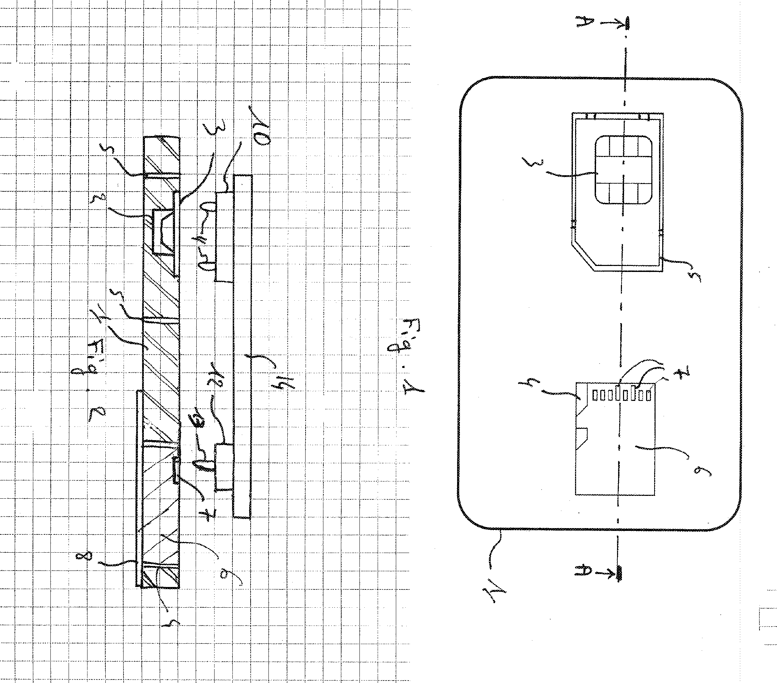

La figure 1 montre une carte à puce selon l'invention qui incluse une carte à mémoire, ici de type microSD. La figure 2 montre cette même carte selon la coupe AA indiquée sur la figure 1. Ces deux figures sont décrites conjointement et les mêmes références identifient les mêmes éléments.

La carte selon l'invention comporte un corps de carte 1 réalisé selon une méthode de fabrication conventionnel par usinage ou moulage ou une combinaison de moulage et d'usinage. Ce corps de carte 1 comporte une cavité non-débouchante 2 réalisée pour recevoir un module 3 de carte à puce. Cette cavité non-débouchante 2 comporte un chanfrein qui permet de coller le module 3 dans la cavité 2 selon une technique connue. Le module 3 comporte des plages de contact qui après collage du module deviennent affleurantes à la surface du corps de carte.

En outre, le corps de carte comporte une cavité débouchante 4 qui traverse de part en part le corps de carte 1. Cette cavité est soit réalisée au moment du moulage de la carte à l'aide d'un moule approprié, soit par poinçonnage. Lorsque la carte est entièrement usinée, le poinçonnage servant à réaliser la zone de prédécoupe 5 qui délimite le plug SIM peut être fait en même temps que la cavité débouchante 4. La cavité 4 est d'une taille suffisante pour recevoir une carte mémoire 6 de type microSD produite séparément. Afin d'éviter toute contraintes sur la carte micro SD, il est préférable d'avoir un certain jeu entre le corps de carte 1 et la carte à mémoire 6.

La carte à mémoire 6 dispose aussi de zones de contacts 7 affleurant sur une de ses faces. Il convient de positionner la carte à mémoire 6 de sorte que ses zones de contact 7 soient aussi affleurantes sur la même face du corps de carte que les plages de contact du module 3. L'ajout de la carte à mémoire 6 dans le corps de carte 1 est fait après le collage du module 3 et avant les étapes de personnalisation.

Le maintien de la carte à mémoire 6 dans la cavité 4 est assuré par une couche adhésive 8 collée sur la face du corps de carte qui est opposées à la face sur laquelle sont affleurants les plages de contact et les zones de contact 7. La couche adhésive 8 comporte un adhésif qui permet d'adhérer de manière amovible au corps de carte 1 et à la carte à mémoire 6. Cette couche adhésive 8 permet un collage-décollage facile tout en assurant un maintien en position de la carte à mémoire 6 à l'intérieur du corps de carte 1. Cette couche adhésive 8 recouvre au moins une partie de la cavité débouchante 4 et peut ne pas recouvrir toute la surface du corps de carte 1.

La carte ainsi réalisée peut ensuite être personnalisée. A cette effet, il convient d'avoir une machine adaptée et permettant de personnaliser simultanément le module 3 et la carte à mémoire 6. L'appareil de personnalisation dispose d'une zone de positionnement où l'on peut placer le corps de carte en laissant l'accès à une face du corps de carte 1. Ainsi une première tête 10 munie d'aiguilles 11 de contact peut venir en en contact avec les plages de contact du module 3 pendant qu'une deuxième tête 12 munies d'aiguilles de contact 13 peut venir en contact avec les zones de contact de la carte à mémoire 6. Chaque tête 10 et 12 est adaptée aux plages ou zones de contact qui sont en vis-à-vis. Il convient d'avoir un moyen de synchronisation permettant d'assurer le contact simultané des deux têtes. Dans l'exemple décrit un bâti commun 14 supporte les deux têtes de contact 10 et 12, et les aiguilles de contact sont montées sur ressort de sorte que lorsque le bâti 14 descend vers le corps de carte 1, chaque aiguille de contact établie un contact électrique efficace avec la plage ou zone en vis-à-vis et ce de manière simultanée.

Il est alors possible de personnaliser le module 3 et la carte à mémoire pendant une même période de temps en utilisant en parallèle les protocoles de communication adaptés d'une part à la carte SIM et d'autre part à la carte mémoire. Les données peuvent alors être transmise simultanément au module et à la carte pendant une période de temps commune, le temps de personnalisation le plus grand définissant le temps de personnalisation total. On économise le temps de personnalisation du module 3 ou de la carte à mémoire 6.

La personnalisation permet de charger dans le module correspondant à la carte SIM toutes les informations propres à l'opérateur et permettant d'identifier la carte de manière unique. La carte SIM peut en outre recevoir des informations de personnalisation propre à l'application ou aux applications chargées dans la carte mémoire 6 qui sont propres à l'opérateur ou propre à l'identification unique de la carte et donc à l'utilisateur final de la carte.

Une personnalisation graphique peut également se faire de manière simultanée sur la carte SIM et sur la carte mémoire. Généralement, préalablement, pendant ou immédiatement après la personnalisation électrique d'une carte à puce, il y a une personnalisation graphique qui correspond par exemple à l'inscription d'un numéro de série unique. Cette personnalisation est faite à l'aide d'une imprimante à jet d'encre ou d'un laser qui grave le numéro dans la carte. Cette personnalisation graphique peut également se faire de manière simultanée sur la carte mémoire ainsi, l'appairage peut être aussi graphique. L'homme du métier pourra noter que si la personnalisation se fait sur la face opposée aux contacts, il est alors préférable que la couche adhésive laisse visible une partie de la carte mémoire.

L'homme du métier comprendra que de nombreuses variantes de l'invention sont possibles. A titre d'exemple, on a décrit un corps de carte avec une seule prédécoupe définissant le plug SIM, il est aussi possible d'avoir une deuxième prédécoupe pour avoir une séparation d'un plug SIM au format 3FF, tout en ayant la cavité pour recevoir la carte à mémoire 6.

Egalement, la carte à mémoire est une carte à mémoire de type microSD car c'est la carte la plus utilisée actuellement dans les combinés de téléphonie mobile. Il est tout à fait possible de réaliser l'invention avec un autre format de carte à mémoire dès lors que l'on adapte la cavité et la deuxième tête de contacts à la carte à mémoire sélectionnée.

## Revendications

1. Carte à puce comportant :
- un corps de carte (1) ayant une première et une deuxième faces, opposées l'une à l'autre, une cavité non-débouchante (2) ouverte sur la première face et une cavité débouchante (4) ouverte sur les première et deuxième faces,
- un module de carte à puce (3) comportant au moins une puce et des plages de contact, ledit module étant placé dans la cavité non-débouchante (2) de sorte que les plages de contact soient affleurantes à la première face du corps de carte (1),
- une carte à mémoire (6) placé dans la cavité débouchante (4) , ladite carte à mémoire (6) comportant des zones de contacts (7) affleurantes sur une face et étant placée dans la cavité (4) de sorte les zones contacts (7) affleurantes sont affleurantes à la première face du corps de carte (1), ladite carte étant maintenue dans la cavité par un moyen de maintien amovible (8) permettant une personnalisation de la carte mémoire (6) appairée avec le module de carte à puce (3).

2. Carte à puce selon la revendication 1, dans laquelle le moyen de maintien amovible est une couche adhésive (8) placée sur la deuxième face et recouvrant au moins une partie de la cavité débouchante sur cette deuxième face, ladite couche adhésive permettant un collage-décollage de ladite couche, et dans lequel le maintien dans la cavité (4) de la carte à mémoire (6) est assuré par le contact adhésif avec la couche adhésive (8).

3. Carte à puce selon la revendication 1, dans laquelle l'appairage entre la carte à mémoire (6) et le module (3) de carte à puce se fait par une personnalisation électrique dans laquelle au moins une donnée de la carte à mémoire (6) fait référence à au moins une donnée du module (3) de carte à puce.

4. Carte à puce selon la revendication 1, dans laquelle l'appairage se fait par l'inscription d'une information commune de référence sur le corps de carte (1) et sur la carte à mémoire (6).

5. Carte à puce selon la revendication 1, dans laquelle la carte à mémoire est de type carte microSD.

6. Carte à puce selon la revendication 1, dans laquelle, le corps de carte (1) comporte un zone prédécoupée (5) autour du module de carte à puce (3), ladite zone prédécoupée définissant un carte SIM au format plug SIM.

7. Carte à puce selon les revendications 5 et 6, dans laquelle la carte SIM et la carte microSD sont toutes les deux personnalisées avec des données différentes correspondant à un même opérateur.

8. Carte à puce selon la revendication 7, dans laquelle la carte SIM et la carte microSD sont toutes les deux personnalisées avec des données différentes correspondant à un même utilisateur.

9. Procédé de personnalisation d'une carte à puce selon la revendication 1, dans lequel une première tête de contacts (10) est mise en contact avec les plages de contact et une deuxième tête de contact (12) est mise en contact avec les zones de contact (7) de la carte à mémoire (6) de manière simultanée de sorte que des données sont transmises au module (3) et à la carte à mémoire (6) de manière simultanée.

10. Dispositif de personnalisation de carte **caractérisé en ce qu**'il comporte au moins une zone de réception de carte destinée à recevoir une carte à puce, une première tête de contact (10) destinée à communiquer à un module (3) de carte à puce, une deuxième tête de contact (12) différente de la première tête de contact et destinée à communiquer avec une carte à mémoire (6), et un moyen de synchronisation (14) apte à mettre en contact simultanément la première et la deuxième têtes avec la carte à puce de sorte qu'un module de carte à puce et une carte à mémoire solidaire de la carte à carte à puce puisse recevoir des données sur une même période de temps.
